# EUROPÄISCHE PATENTSCHRIFT

(11) **EP 4 446 615 B1**
(45) Veröffentlichungstag und Bekanntmachung des Hinweises auf die Patenterteilung: **24.06.2026**
(21) Anmeldenummer: 24157279.1
(22) Anmeldetag: 13.02.2024
(51) Int. Cl.: F16H 7/12, A01D 69/06

(54) **RIEMENGETRIEBE**
BELT TRANSMISSION
TRANSMISSION À COURROIE

(30) Priorität: 12.04.2023 DE 102023109219
(43) Veröffentlichungstag der Anmeldung: 16.10.2024
(73) Patentinhaber: CLAAS Selbstfahrende Erntemaschinen GmbH, 33428 Harsewinkel (DE)
(72) Erfinder: Sleuwen, Johann-Kuno, 49086 Osnabrück (DE)
(74) Vertreter: CLAAS Gruppe

(56) Entgegenhaltungen:
- EP-A2- 1 460 307
- GB-A- 1 480 566
- JP-A- S59 170 555
- US-A- 4 400 930

## Beschreibung

Die Erfindung betrifft ein Riemengetriebe für eine landwirtschaftliche Arbeitsmaschine gemäß dem Oberbegriff des Anspruchs 1.

Die Arbeitsmaschine, die insbesondere von einem Mähdrescher gebildet sein kann, umfasst mindestens ein Arbeitsorgan, das insbesondere mittelbar oder unmittelbar mittels einer Kraftmaschine, insbesondere einer Verbrennungskraftmaschine, der Arbeitsmaschine betreibbar ist. Ein solches Arbeitsorgan kann am Beispiel eines Mähdreschers beispielsweise von einem Dreschorgan, einem Trennorgan und/oder einem Häckselorgan gebildet sein. Zur Übertragung eines Drehmoments auf das mindestens eine Arbeitsorgan umfasst die Arbeitsmaschine ein Riemengetriebe, das dazu geeignet ist, ein Drehmoment von einer Abtriebswelle auf das Arbeitsorgan zu übertragen. Eine solche Abtriebswelle kann unmittelbar oder mittelbar über mindestens ein weiteres Riemengetriebe von einer Kraftmaschine angetrieben sein. Das Riemengetriebe umfasst zumindest eine als Abtriebsscheibe ausgebildete Riemenscheibe, die mit der Abtriebswelle wirkverbunden ist, und eine weitere als Antriebsscheibe ausgebildete Riemenscheibe, die mit einer Antriebswelle des Arbeitsorgans wirkverbunden ist. Ferner umfasst das Riemengetriebe mindestens einen endlosen Treibriemen, mittels dessen die Antriebsscheibe und die Abtriebsscheibe mittelbar oder unmittelbar miteinander gekoppelt sind, sodass ein an der Abtriebsscheibe bereitgestelltes Drehmoment mittels des Treibriemens auf die Antriebsscheibe übertragbar ist. Hierbei ist es ohne Weiteres denkbar, dass die Übertragung des Drehmoments von der Abtriebswelle auf die Antriebswelle lediglich mittelbar erfolgt, wobei beispielsweise das Riemengetriebe mindestens eine Umlenkscheibe aufweist, mittels der ein Drehmoment von einem ersten Treibriemen des Riemengetriebes an einen weiteren Treibriemen des Riemengetriebes übergeben wird.

Dem Riemengetriebe ist eine Riemenspanneinrichtung zugeordnet, die dazu geeignet ist, den Treibriemen des Riemengetriebes zumindest während eines bestimmungsgemäßen Betriebs des Riemengetriebes zu spannen bzw. auf Spannung zu halten. Hierzu umfasst die Riemenspanneinrichtung mindestens ein vorgespanntes Spannelement, insbesondere eine Spannfeder und mindestens ein Spannrolle. Letztere greift unmittelbar in den Treibriemen des Riemengetriebes ein, wobei die Spannrolle unter Wirkung einer Vorspannung des Spannelements mit dem Treibriemen zusammenwirkt. Auf diese Weise wird der Treibriemen wunschgemäß auf Spannung gehalten.

Arbeitsmaschinen der vorstehend genannten Art sind im Stand der Technik bereits bekannt. Hierzu wird beispielhaft auf das europäische Patent EP 0 126 808 B1 hingewiesen. Dieses beschreibt eine als Mähdrescher ausgebildete landwirtschaftliche Arbeitsmaschine, die mit einem Riemengetriebe ausgestattet ist. Dieser dient gemäß vorstehender Beschreibung zur Übertragung eines Drehmoments von einer Abtriebswelle auf eine Antriebswelle. Zur Haltung des verwendeten Treibriemens auf Spannung wird eine Riemenspanneinrichtung verwendet.

Die bekannten Riemenspanneinrichtungen umfassen typischerweise einen Spannrollenhalter, an dem eine jeweilige Spannrolle angeordnet ist. Wie am Beispiel des vorstehend genannten Dokuments zum Stand der Technik erkennbar, ist ein solcher Spannrollenhalter in der Regel drehbeweglich um eine Drehachse gelagert. Auf diese Weise kann die Spannrolle auf einem Kreisbogenabschnitt um die Drehachse geführt werden, wobei der Schwenkarm typischerweise mit einem Spannelement, insbesondere in Form einer vorgespannten Feder, zusammenwirkt. Die GB1480566A zeigt ein Riemengetriebe der Stand der Technik.

Das Spannelement sorgt gemäß vorstehender Beschreibung dafür, dass die Spannrolle gegen einen zugeordneten Treibriemen gedrückt ist und diesen dadurch auf Spannung hält. Sollte die Spannung des Treibriemens sich verändern, kann die Spannrolle infolge der Wirkung der Spannkraft des Spannelements mittels Verschwenkens um die Drehachse nachgeführt werden und weiterhin bestimmungsgemäß eine Spannwirkung auf den Treibriemen ausüben.

Riemengetriebe in landwirtschaftlichen Arbeitsmaschinen sind regelmäßig als sogenannte Wechselgetriebe ausgebildet. Diese ermöglichen eine Anpassung des Übersetzungsverhältnisses indem auf der An- und Abtriebswelle jeweils zwei paar Riemenscheiben mit unterschiedlichen Wirkdurchmesser angeordnet sind. Mit anderen Worten sind auf einer Antriebswelle zwei unterschiedliche Durchmesser aufweisende Antriebsscheiben angeordnet und auf einer Abtriebswelle zwei unterschiedliche Durchmesser aufweisende Abtriebsscheiben angeordnet. Zur Anpassung des Übersetzungsverhältnisses wird der Treibriemen von einem Riemenscheibenpaar auf ein anderes Riemenscheibenpaar umgelegt. Hierfür ist es erforderlich, dass der Treibriemen entspannt wird, indem die von dem Spannelement auf die Spannrolle übertragene Spannkraft und somit die Spannung des Treibriemens reduziert oder vorzugsweise aufgehoben wird. Nachteilig an den aus dem Stand der Technik bekannten Riemenspanneinrichtungen ist, dass eine derartige Aufhebung der Spannung des Treibriemens nicht werkzeuglos durchführbar ist, da eine Demontage etwaiger Komponenten der Riemenspanneinrichtung zur Aufhebung der Spannung erforderlich ist.

Es ist deshalb Aufgabe der Erfindung, die beschriebenen Nachteile des Standes der Technik zu vermeiden und insbesondere einen Riemenspanner zu schaffen, der werkzeuglos eine Überführung eines Treibriemens von einem gespannten Zustand hin zu einem entspannten Zustand und umgekehrt ermöglicht.

Diese Aufgabe wird erfindungsgemäß durch die kennzeichnenden Merkmale des Anspruchs 1 gelöst.

Gemäß dem Anspruch 1 wird ein Riemengetriebe für eine landwirtschaftliche Arbeitsmaschine vorgeschlagen, insbesondere ein selbstfahrender Mähdrescher, umfassend die Merkmale des Anspruchs 1. Mittels einer als Kniehebel ausgeführten Riemenspanneinrichtung wird eine Riemenspanneinrichtung geschaffen, die ein werkzeugloses Überführen der Riemenspanneinrichtung von einem eine Spannkraft auf den Triebriemen ausübenden Zustand hin zu einem Zustand ermöglicht, in dem die Riemenspanneinrichtung keine Spannkraft auf den Treibriemen ausübt.

Hierbei ist es besonders vorteilhaft, wenn die Spannfeder von einem im Wesentlichen entspannten Zustand zu einen gespannten Zustand mittels der Riemenspanneinrichtung überführbar ist.

Gemäss der Erfindung weist die Riemenspanneinrichtung einen Spannhebel zum Spannen der Spannfeder auf, wobei der Spannhebel um eine zweite Drehachse drehbeweglich angeordnet ist. Der Spannhebel kann mittels der Riemenspanneinrichtung verschwenkt werden, sodass dieser die Spannfeder von einem gespannten Zustand hin zu einem entspannten Zustand oder umgekehrt überführt.

Gemäß der Erfindung ist vorgesehen, dass die Riemenspanneinrichtung einen Hebel zum Verschwenken des Spannhebels und eine Druckstrebe aufweist, wobei der Hebel um eine dritte Drehachse drehbeweglich an dem Spannhebel angeordnet ist, wobei die Druckstrebe einendig drehbeweglich um die erste Drehachse angeordnet ist und anderendig am freien Ende des Hebels verschwenkbeweglich um eine vierte Drehachse angeordnet ist. Hierdurch wird auf einfache Art und Weise ein Kniegelenk zum Verschwenken des Spannhebels der als Kniehebel ausgebildeten Riemenspanneinrichtung geschaffen.

Gemäß einer weiteren vorteilhaften Ausgestaltung ist vorgesehen, dass Riemengetriebe einen Anschlag zur Arretierung der Riemenspanneinrichtung in einem gespannten Zustand der Spannfeder umfasst. Ein derartiger Anschlag kann derart ausgebildet sein, sodass dieser in einem gespannten Zustand der Spannfeder an der Druckstrebe oder dem Hebel anliegt, sodass eine Drehbewegung des Hebels und der Druckstrebe begrenzt ist. Mithin ermöglicht der Anschlag auf einfache Art und Weise die Riemenspanneinrichtung in einem gespannten Zustand der Spannfeder zu Arretieren.

Besonders bevorzugt ist es, wenn an dem Hebel ein Handhebel zum manuellen Verschwenken des Hebels um die dritte Drehachse angeordnet ist. Ein Handhebel bildet ein kostengünstiges Betätigungsmittel der Riemenspanneinrichtung.

Um die Spannfeder vorzuspannen kann an dem Spannhebel ein Federführungszylinder zum Spannen der Spannfeder drehbeweglich um eine fünfte Drehachse angeordnet sein.

Vorzugsweise kann die Spannfeder mittels einer ersten und zweiten Federführung auf einer in kraftübertragender Weise mit dem Spannrollenhalter gekoppelten Zugstange angeordnet sein. Weiter vorzugsweise kann zur Übertragung einer Zugkraft von der Spannfeder auf den Spannrollenhalter an dem Spannrollenhalter ein sich ausgehend von der ersten Drehachse in radialer Richtung erstreckender Hebelarm angeordnet sein, wobei die Zugstange drehbeweglich um eine sechste Drehachse an dem Hebelarm angeordnet ist.

Gemäß einer vorteilhaften Weiterbildung kann die erste und zweite Federführung jeweils einen zylindrischen Abschnitt umfassen, die konzentrisch zu der Zugstange angeordnet sind und radial außenseitig von Federwicklungen der Spannfeder umgeben sind, wobei die erste Federführung über eine erste Stirnseite der Spannfeder hinausragt und die zweite Federführung über eine zweite Stirnseite der Spannfeder hinausragt. Die maximale Kompression der Spannfeder ist erreicht, sobald die zylindrischen Abschnitte stirnseitig aneinander anliegen. Hierdurch wird eine Schubumkehrsicherung geschaffen, die verhindert, dass die Spannfeder im Falle eine Schubumkehr derart komprimiert wird und damit einhergehend die Spannrolle derart weit von dem Treibriemen weggeschwenkt ist, sodass der Treibriemen seine Spannung verliert und von den Riemenscheiben herunterrutscht. Eine Schubumkehr kann beispielswiese beim Ausschalten eines Antriebsmotors auftreten, wenn die Antriebsscheibe verzögert wird und ein von dem Riemengetriebe angetriebenes Arbeitsorgan aufgrund der Massenträgheit kurzzeitig weiterläuft.

Um die Spannfeder vorzuspannen kann ein erster Führungsanschlag, vorzugsweise eine Stellschraube, auf der Zugstange angeordnet sein und der Spannhebel einen zweiten Führungsanschlag für die Spannfeder bilden. Ein als Stellschraube ausgebildeter Führungsanschlag bildet ein zusätzliches Mittel zur Einstellung einer Spannkraft der Spannfeder.

Eine weiter vorteilhafte Ausgestaltung sieht vor, dass der Spannhebel den zweiten Führungsanschlag auf einer dem Spannrollenhalter zugewandten Seite der Spannfeder bildet und vorzugsweise der erste Führungsanschlag auf einer dem Spannrollenhalter abgewandten Seite der Spannfeder auf der Zugstange angeordnet ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: Einen Längsschnitt durch eine landwirtschaftliche Arbeitsmaschine gemäß dem Stand der Technik,
- Figur 2: Einen Längsschnitt entlang wesentlicher Arbeitsorgane einer anderen landwirtschaftlichen Arbeitsmaschine gemäß dem Stand der Technik,
- Figur 3: Ein Riemengetriebe mit einer Riemenspanneinrichtung,
- Figur 4: Eine Riemenspanneinrichtung gemäß Figur 3,
- Figur 5: Eine Schnittansicht der Riemenspanneinrichtung gemäß Figur 4.

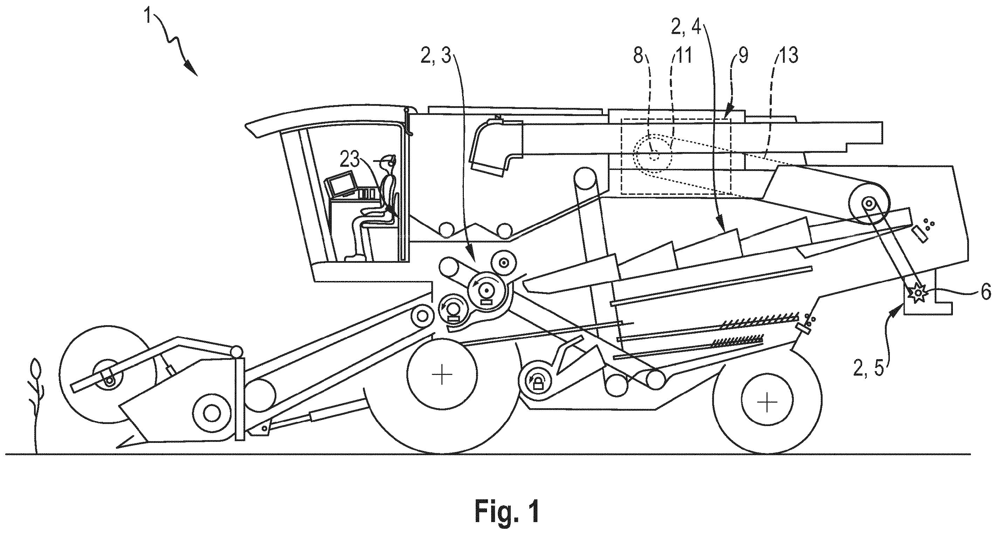

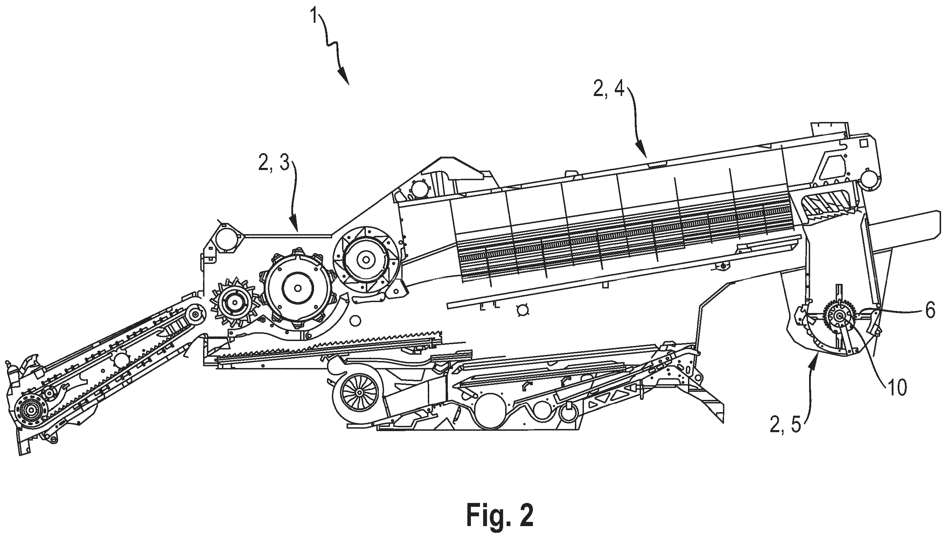

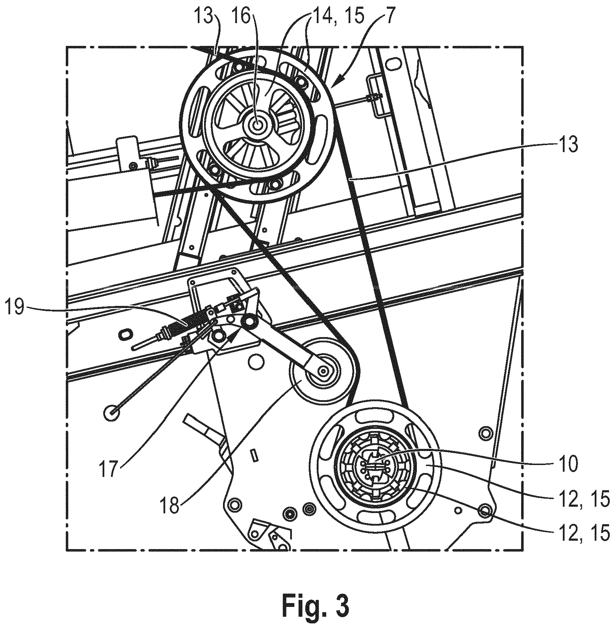

Ein Ausführungsbeispiel einer erfindungsgemäßen landwirtschaftlichen Arbeitsmaschine 1, die hier von einem Mähdrescher gebildet ist, ergibt sich insbesondere anhand der Figuren 3 bis 5. Ein Beispiel für eine gemäß dem Stand der Technik bekannte landwirtschaftliche Arbeitsmaschine 1 ist in Figur 1 und 2 dargestellt. Die Arbeitsmaschine 1 umfasst eine Mehrzahl von Arbeitsorganen 2, nämlich beispielsweise ein Dreschorgan 3, ein Abscheideorgan 4 sowie ein Häckselorgan 5. Das Dreschorgan 3 ist dazu geeignet, geernteten Pflanzen zu bearbeiten, sodass die daran vorhandenen Körner, die als Ergebnis der Ernte gewünscht sind, von übrigen Pflanzenresten abgelöst werden. Die Trennung der auf diese Weise gelösten Körner von den Pflanzenresten erfolgt mittels des dem Dreschorgan 3 nachgeschalteten Trennorgans 4, dass in dem Beispiel gemäß Figur 1 als Hordenschüttler ausgebildet ist.

Bei dem Beispiel gemäß Figur 2 ist das Abscheideorgan 4 stattdessen in Form eines axialen Axialrotors ausgebildet, der sich zumindest im Wesentlichen parallel zu einer Längsachse der Arbeitsmaschine 1 erstreckt. An einem rückwärtigen Ende der Arbeitsmaschine 1 werden die Pflanzenreste, die nicht zur unmittelbaren Verwertung vorgesehen sind, aus der Arbeitsmaschine 1 ausgeworfen. Hierzu ist die Arbeitsmaschine 1 mit einem Häckselorgan 5 ausgestattet, das dazu dient die Pflanzenreste zu zerkleinern und schließlich aus der Arbeitsmaschine 1 auszuwerfen.

Um das Häckselorgan 5 anzutreiben, das heißt dem Häckselorgan 5 ein Drehmoment zur Verfügung zu stellen, um einen Häckselrotor 6 des Häckselorgans 5 anzutreiben, ist die Arbeitsmaschine 1 mit einem Riemengetriebe 7 ausgestattet. Dieser ist dazu eingerichtet, ein an einer Abtriebswelle 8 einer Verbrennungskraftmaschine 9 bereitgestelltes Drehmoment an eine Antriebswelle 10 zu übertragen, die in dem gezeigten Beispiel dem Häckselrotor 6 des Häckselorgans 6 zugeordnet ist. Für diese Übertragung umfasst das Riemengetriebe 7 eine mit der Abtriebswelle 8 zusammenwirkende Abtriebsscheibe 11 sowie eine auf der Antriebswelle 10 angeordnete Antriebsscheibe 12. Die Abtriebsscheibe 11 und die Antriebsscheibe 10 sind mittels Treibriemen 13 derart miteinander verbunden, dass die Übertragung der Drehmomente über die Treibriemen 13 erfolgen kann.

In dem in Figur 3 gezeigten Beispiel umfasst das Riemengetriebe 7 eine als Umlenkscheibe 14 ausgebildete Riemenscheibe 15 die auf einer Welle 16 drehbeweglich angeordnet ist, mittels der eine Übertragung des von der Abtriebswelle 8 (siehe Figur 1) abgenommenen Drehmoments auf einen Treibriemen 13 und auf diese Weise schließlich an die als Antriebsscheibe 12 ausgebildete weitere Riemenscheibe 15 des Häckselorgans 5 übertragen wird. Die Treibriemen 13 können beispielsweise in Form eines Keilriemens oder eines Zahnriemens ausgeführt sein. Die Abtriebswelle 8 und die Welle 16 sind in dem hier gezeigten Ausführungsbeispiel separat ausgeführt. In einer alternativen Ausgestaltung können die Abtriebswelle 8 und die Welle 16 als eine Welle 16 ausgeführt sein.

Hier und vorzugsweise ist das Riemengetriebe 7 als Wechselgetriebe ausgebildet. Gemäß dieser Ausführung ist auf der Welle 16 eine weitere als Umlenkscheibe 14 ausgebildete Riemenscheibe 15 angeordnet, wobei die beiden auf der Welle 16 angeordneten Umlenkscheiben 14 unterschiedlich große Durchmesser aufweisen, sodass sich für das Riemengetriebe 7 unterschiedliche Übersetzungsverhältnisse ergeben. Weiterhin sind auf der Antriebswelle 10 ebenfalls zwei als Antriebsscheiben 12 ausgebildete Riemenscheiben 15 angeordnet, wobei die beiden auf der Antriebswelle 10 angeordneten Antriebsscheiben ebenfalls unterschiedliche Durchmesser aufweisen, um unterschiedliche Übersetzungsstufen des Riemengetriebes 7 bereitzustellen. Ein Wechsel des Treibriemens 13 zwischen den unterschiedliche Durchmesser aufweisenden Riemenscheiben 15 ermöglicht eine Einstellung unterschiedlicher Drehzahlen an dem Häckselorgan 6. Hierdurch ist die Häckselqualität einstellbar. Zum Wechsel des Treibriemens 13 zwischen den Riemenscheiben 15 ist es erforderlich, dass der Treibriemen 13 in einem entspannten Zustand ist.

Damit eine zuverlässige Kraftübertragung über den Treibriemen 13 erfolgen kann, ist dieser durchgehend während eines Betriebs des Riemengetriebes 7 gespannt. Um dies sicherzustellen, ist es bekannt, dem Riemengetriebe 7 eine Riemenspanneinrichtung 17 zur Seite zu stellen, die mit dem Treibriemen 13 zusammenwirkt und diesen auf Spannung hält. Die Riemenspanneinrichtung 17 gemäß dem gezeigten Beispiel umfasst hierzu eine Spannrolle 18, die unmittelbar mit dem Treibriemen 13 zusammenwirkt und eine Spannkraft auf diesen überträgt. Um dies zu erreichen ist die Riemenspanneinrichtung 17 mit einer Spannfeder 19 zur Erzeugung der Spannkraft ausgestattet.

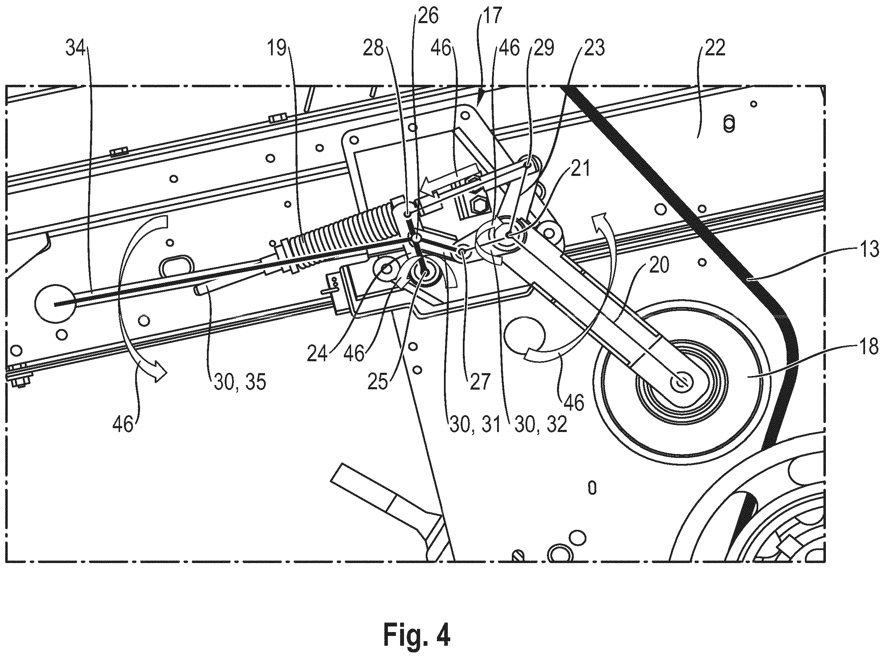

Wie in Figur 4 dargestellt, umfasst die Riemenspanneinrichtung 17 einen Spannrollenrollenhalter 20. Der Spannrollenhalter 20 ist einendig drehbeweglich um eine erste Drehachse 21 an einer Seitenwand 22 der Arbeitsmaschine 1 gelagert. An dem freien Ende des Spannrollenhalters 20 ist die Spannrolle 18 drehbeweglich angeordnet. Ausgehend von der ersten Drehachse 21 erstreckt sich ein Hebelarm 23 in radialer Richtung. Der Hebelarm 23 ist ebenfalls drehbeweglich um die erste Drehachse 21 und in einem Winkel zu dem Spannrollenhalter 20 angeordnet. Der Hebelarm 23 ist mit dem Spannrollenhalter 20 verbunden, sodass eine Drehbewegung von dem Hebelarm 23 gleichermaßen auf den Spannrollenhalter 20 übertragen wird.

Die Riemenspanneinrichtung 17 ist zum Spannen der Spannfeder 19 als Kniehebel ausgebildet. Mittels der Riemenspanneinrichtung 17 ist die Spannfeder 19 von einem im Wesentlichen entspannten Zustand zu einem gespannten Zustand überführbar. Im gespannten Zustand generiert die Spannfeder 19 eine Anpresskraft zum Pressen der Spannrolle 18 in den Treibriemen 13. Im entspannten Zustand der Spannfeder 19 ist der Spannrollenhalter 20 derart verschwenkt, sodass die Spannrolle 18 beabstandet zu dem Treibriemen 13 ist.

Zum Spannen der Spannfeder 19 umfasst die Riemenspanneinrichtung 17 einen Spannhebel 24. Der Spannhebel 24 ist um eine zweite Drehachse 25 drehbeweglich an der Seitendwand 22 der Arbeitsmaschine 1 angeordnet. Die erste Drehachse 21 des Spannrollenhalters 20 und die zweite Drehachse 25 des Spannhebels 24 sind ortsfest an der Seitenwand 22 der Arbeitsmaschine 1 positioniert. Weitere Verbindungshebel 30, hier und vorzugsweise drei weitere Verbindungshebel 30, sind zwischen dem Spannrollenhalter 20 und dem Spannhebel 24 unter Ausbildung vier weiterer Drehachsen 26 - 29 angeordnet. Die weiteren vier Drehachsen 26 - 29 sind relativ beweglich zu der ersten und zweiten Drehachse 21, 25 angeordnet. Die erste und zweite Drehachse 21, 25 sowie die weiteren Drehachsen 26-29 erstrecken sich parallel zueinander. Die Verbindungshebel 30 bilden zusammen mit dem Spannrollenhalter 20 und dem Spannhebel 24 die als Kniehebel ausgebildete Riemenspanneinrichtung 17.

Ein Verbindungshebel 30 ist als Hebel 31 zum Verschwenken des Spannhebels 24 ausgebildet, wobei der Hebel 31 um eine dritte Drehachse 26 drehbeweglich an dem Spannhebel 24 angeordnet ist. An dem freien Ende des Hebels 31 ist einendig ein als Druckstrebe 32 ausgebildeter Verbindungshebel 30 drehbeweglich um eine vierte Drehachse 27 angeordnet, wobei die Druckstrebe 32 anderendig drehbeweglich um die erste Drehachse 21 angeordnet ist. Die Druckstrebe 32 und der Hebel 31 bilden das Kniegelenk der als Kniehebel ausgebildeten Riemenspanneinrichtung 17.

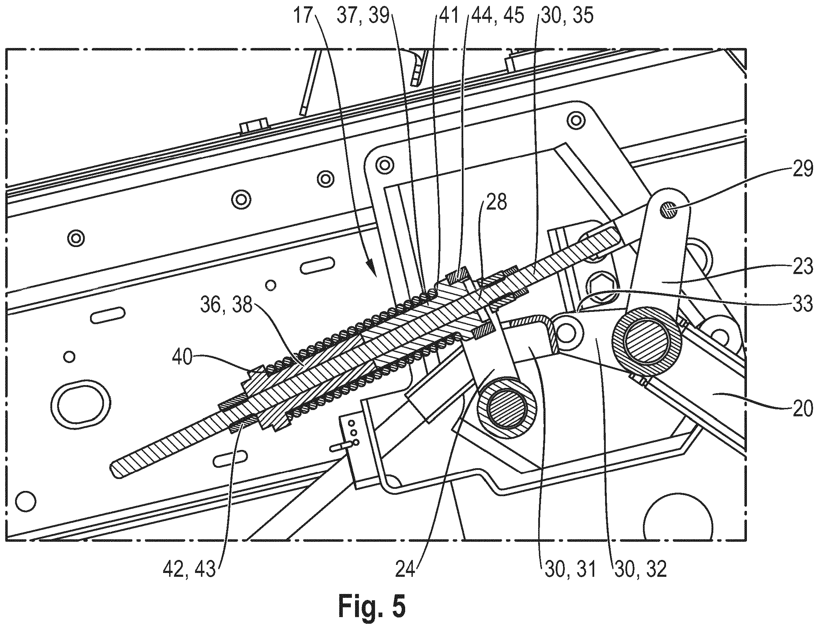

Wie die Schnittansicht der Riemenspanneinrichtung 17 gemäß Figur 5 darstellt, ist an der Seitenwand 22 ein Anschlag 33 angeordnet. Der Anschlag 33 ist zur Arretierung der Riemenspaneinrichtung 17 in einem gespannten Zustand der Spannfeder 19 vorgesehen und eingerichtet. Im arretierten Zustand befindet sich der Anschlag 33 in Kontakt mit der Druckstrebe 32, sodass eine Drehbewegung der Druckstrebe 32 und des Hebels 31 und somit auch des Spannhebels 24 begrenzt ist.

Hier und vorzugsweise ist an dem Hebel 31 ein Handhebel 34 zur manuellen Bedienung der Riemenspanneinrichtung 17 angeordnet. Der Handhebel 34 ist zum manuellen Verschwenken des Hebels 31 um die dritte Drehachse 26 vorgesehen und eingerichtet.

An dem Hebelarm 23 ist ein als Zugstange 35 ausgebildeter Verbindungshebel 30 drehbeweglich um die sechste Drehachse 29 angeordnet. Die Spannfeder 19 ist mittels einer ersten Federführung 36 und einer zweiten Federführung 37 auf der Zugstange 35 angeordnet. Die erste und zweite Federführung 36, 37 umfassen jeweils einen zylindrischen Abschnitt 38, 39. Die zylindrischen Abschnitte 38, 39 erstrecken sich jeweils in axialer Richtung zu der Zugstange 35 und sind konzentrisch zu der Zugstange 35 angeordnet. Die Federwicklungen der Spannfeder 19 umgeben die zylindrischen Abschnitte 38, 39 jeweils radial außenseitig.

Die erste Federführung 38 ragt über eine erste Stirnseite 40 der Spannfeder 19 hinaus und die zweite Federführung 39 ragt über eine zweite Stirnseite 41 der Spannfeder 19 hinaus, sodass die Spannfeder 19 zwischen der ersten und zweiten Federführung 38, 39 eingeklemmt ist.

Eine Stellschraube 42 bildet einen ersten Führungsanschlag 43 für die Spannfeder 19 auf der Zugstange 35 aus. Ein zweiter Führungsanschlag 44 bildet ein an dem Spannhebel 24 um eine fünfte Drehachse 28 drehbeweglich angeordneter Federführungszylinder 45. Mittels des ersten und zweiten Federführungsanschlags 43, 44 ist der Abstand der ersten und zweiten Federführung 36, 37 zueinander einstellbar.

Hier und vorzugsweise bildet der Spannhebel 24 den zweiten Führungsanschlag 44 auf einer dem Spannrollenhalter 20 zugewandten Seite der Spannfeder 19, wobei der erste Führungsanschlag 43 auf einer dem Spannrollenhalter 20 abgewandten Seite der Spannfeder 19 auf der Zugstange 35 angeordnet ist. Diese Anordnung bewirkt, dass in der in Figur 5 dargestellten Stellung die zylindrischen Abschnitte 38, 39 stirnseitig in Kontakt zueinander stehen, sodass in dieser Stellung die maximal einstellbare Vorspannung an der Spannfeder 19 eingestellt ist.

In Figur 4 ist die Rotationsrichtung der Komponenten der Riemenspanneinrichtung 17 bei einem Spannvorgang vom entspannten Zustand der Spannfeder 19 hin zu einem in Figur 3 und 5 gezeigten gespannten Zustand der Spannfeder 19 durch die Pfeile 46 näher dargestellt. Eine Abwärtsbewegung des Handhebels 45 bewirkt, dass der Hebel 31 eine Schwenkbewegung um die dritte Drehachse 26 durchführt. Mittels der Druckstrebe 32 wird hierbei der Spannhebel 24 von der ersten Drehachse 21 weggedrückt, sodass eine Rotationsbewegung des Spannhebels 24 um die zweite Drehachse 25 resultiert und zugleich der Federführungszylinder 45 die zweite Federführung 37 in axialer Richtung hin zu der ersten Federführung 36 verschiebt, sodass die Vorspannung der Spannfeder 19 zunimmt. Hierbei wird mittels der Zugstange 35 eine Zugkraft auf den Hebelarm 23 ausgeübt, sodass durch eine Schwenkbewegung des Spannrollenhalters 20 die Spannrolle 18 gegen den Treibriemen 13 gepresst wird.

**Bezugszeichenliste:**

| | | | |
|---|---|---|---|
| 1 | Arbeitsmaschine | 34 | Handhebel |
| 2 | Arbeitsorganen | 35 | Zugstange |
| 3 | Dreschorgan | 36 | Erste Federführung |
| 4 | Abscheideorgan | 37 | Zweite Federführung |
| 5 | Häckselorgan | 38 | Zylindrischer Abschnitt |
| 6 | Häckselrotor | 39 | Zylindrischer Abschnitt |
| 7 | Riemengetriebe | 40 | Erste Stirnseite |
| 8 | Abtriebswelle | 41 | Zweite Stirnseite |
| 9 | Verbrennungskraftmaschine | 42 | Stellschraube |
| 10 | Antriebswelle | 43 | Erster Führungsanschlag |
| 11 | Abtriebsscheibe | 44 | Zweiter Führungsanschlag |
| 12 | Antriebsscheibe | 45 | Federführungszylinder |
| 13 | Treibriemen | 46 | Pfeil |
| 14 | Umlenkscheibe | | |
| 15 | Riemenscheibe | | |
| 16 | Welle | | |
| 17 | Riemenspanneinrichtung | | |
| 18 | Spannrolle | | |
| 19 | Spannfeder | | |
| 20 | Spannrollenhalter | | |
| 21 | Erste Drehachse | | |
| 22 | Seitenwand | | |
| 23 | Hebelarm | | |
| 24 | Spannhebel | | |
| 25 | Zweite Drehachse | | |
| 26 | Dritte Drehachse | | |
| 27 | Vierte Drehachse | | |
| 28 | Fünfte Drehachse | | |
| 29 | Sechste Drehachse | | |
| 30 | Verbindungshebel | | |
| 31 | Hebel | | |
| 32 | Druckstrebe | | |
| 33 | Anschlag | | |

## Patentansprüche

1. Riemengetriebe (7) für eine landwirtschaftliche Arbeitsmaschine (1), insbesondere ein selbstfahrender Mähdrescher, umfassend
- zumindest zwei Riemenscheiben (15), wobei die Riemenscheiben (15) mittels eines endlosen Treibriemens (13) miteinander gekoppelt sind,
- eine Riemenspanneinrichtung (17), wobei die Riemenspanneinrichtung (17) einen Spannrollenhalter (20) umfasst der einendig drehbeweglich um eine erste Drehachse (21) gelagert ist und anderendig eine Spannrolle (18) zum Spannen des Treibriemens (13) lagert,
wobei die Riemenspanneinrichtung (17) eine Spannfeder (19) umfasst die dazu vorgesehen und eingereichte ist, eine Spannkraft zum Spannen des Treibriemens (13) auf den Spannrollenhalter (20) auszuüben,
**dadurch gekennzeichnet, dass**
die Riemenspanneinrichtung (17) zum Spannen der Spannfeder (19) als Kniehebel ausgebildet ist, wobei die Riemenspanneinrichtung (17) einen Spannhebel (24) zum Spannen der Spannfeder (19) aufweist, wobei der Spannhebel (24) um eine zweite Drehachse (25) drehbeweglich angeordnet ist, wobei die Riemenspanneinrichtung (17) einen Hebel (31) und eine Druckstrebe (32) zum Verschwenken des Spannhebels (24) umfasst, wobei der Hebel (31) um eine dritte Drehachse (26) drehbeweglich an dem Spannhebel (24) angeordnet ist, wobei die Druckstrebe (32) einendig drehbeweglich um die erste Drehachse (21) angeordnet ist und anderendig am freien Ende des Hebels (31) verschwenkbeweglich um eine vierte Drehachse (27) angeordnet ist.

2. Riemengetriebe (7) nach Anspruch 1, **dadurch gekennzeichnet, dass** die Spannfeder (19) von einem im Wesentlichen entspannten Zustand zu einen gespannten Zustand mittels der Riemenspanneinrichtung (17) überführbar ist.

3. Riemengetriebe (7) nach Anspruch 1, **dadurch gekennzeichnet, dass** das Riemengetriebe einen Anschlag (33) zur Arretierung der Riemenspanneinrichtung (17) in einem gespannten Zustand der Spannfeder (19) umfasst.

4. Riemengetriebe (7) nach einem der Ansprüche 1 bis 3, **dadurch gekennzeichnet, dass** an dem Hebel (31) ein Handhebel (34) zum manuellen Verschwenken des Hebels (31) um die dritte Drehachse (26) angeordnet ist.

5. Riemengetriebe (7) nach einem der Ansprüche 1 bis 4, **dadurch gekennzeichnet, dass** an dem Spannhebel (24) ein Federführungszylinder (45) zum Spannen der Spannfeder (19) drehbeweglich um eine fünfte Drehachse (28) angeordnet ist.

6. Riemengetriebe (7) nach einem der Ansprüche 1 bis 5, **dadurch gekennzeichnet, dass** die Spannfeder (19) mittels einer ersten und zweiten Federführung (36, 37) auf einer in kraftübertragender Weise mit dem Spannrollenhalter (20) gekoppelten Zugstange (35) angeordnet ist.

7. Riemengetriebe (7) nach Anspruch 6, **dadurch gekennzeichnet, dass** an dem Spannrollenhalter (20) ein sich ausgehend von der ersten Drehachse (21) in radialer Richtung erstreckender Hebelarm (23) angeordnet ist, wobei die Zugstange (35) drehbeweglich um eine sechste Drehachse (29) an dem Hebelarm (23) angeordnet ist.

8. Riemengetriebe (7) nach einem der Ansprüche 6 bis 7, **dadurch gekennzeichnet, dass** die erste und zweite Federführung (36, 37) jeweils einen zylindrischen Abschnitt (38, 39) umfassen, die konzentrisch zu der Zugstange (35) angeordnet sind und radial außenseitig von Federwicklungen der Spannfeder (19) umgeben sind, wobei die erste Federführung (36) über eine erste Stirnseite (40) der Spannfeder (19) hinausragt und die zweite Federführung (37) über eine zweite Stirnseite (41) der Spannfeder (19) hinausragt.

9. Riemengetriebe (7) nach einem der Ansprüche 1 bis 8, **dadurch gekennzeichnet, dass** ein erster Führungsanschlag (43), vorzugsweise eine Stellschraube (42), auf der Zugstange (35) angeordnet ist und der Spannhebel (24) einen zweiten Führungsanschlag (44) für die Spannfeder (19) bildet.

10. Riemengetriebe (7) nach Anspruch 9, **dadurch gekennzeichnet, dass** der Spannhebel (24) den zweiten Führungsanschlag (44) auf einer dem Spannrollenhalter (20) zugewandten Seite der Spannfeder (19) bildet und vorzugsweise der erste Führungsanschlag (43) auf einer dem Spannrollenhalter (20) abgewandten Seite der Spannfeder (19) auf der Zugstange (35) angeordnet ist.

## Claims

1. Belt drive (7) for an agricultural working machine (1), in particular a self-propelled combine harvester, comprising
- at least two belt pulleys (15), wherein the belt pulleys (15) are coupled to one another by means of an endless drive belt (13),
- a belt-tensioning device (17), wherein the belt-tensioning device (17) comprises a tensioning-roller holder (20) which, at one end, is mounted so as to be rotatable about a first axis of rotation (21) and which, at the other end, has a tensioning roller (18) for tensioning the drive belt (13) mounted on it,
wherein the belt-tensioning device (17) comprises a tensioning spring (19) which is intended and configured to exert a tensioning force, for tensioning the drive belt (13), on the tensioning-roller holder (20),
**characterized in that**
the belt-tensioning device (17), for tensioning the tensioning spring (19), is designed as a knee lever, wherein the belt-tensioning device (17) has a tensioning lever (24) for tensioning the tensioning spring (19), wherein the tensioning lever (24) is arranged so as to be rotatable about a second axis of rotation (25), wherein the belt-tensioning device (17) comprises a lever (31) and a compression strut (32) for pivoting the tensioning lever (24), wherein the lever (31) is arranged on the tensioning lever (24) so as to be rotatable about a third axis of rotation (26), wherein the compression strut (32), at one end, is arranged so as to be rotatable about the first axis of rotation (21) and, at the other end, is arranged on the free end of the lever (31) so as to be pivotable about a fourth axis of rotation (27).

2. Belt drive (7) according to Claim 1, **characterized in that** the tensioning spring (19) is transferable from a substantially relaxed state to a tensioned state by means of the belt-tensioning device (17).

3. Belt drive (7) according to Claim 1, **characterized in that** the belt drive comprises a stop (33) for arresting the belt-tensioning device (17) in a tensioned state of the tensioning spring (19).

4. Belt drive (7) according to one of Claims 1 to 3, **characterized in that** a hand lever (34) for manually pivoting the lever (31) about the third axis of rotation (26) is arranged on the lever (31).

5. Belt drive (7) according to one of Claims 1 to 4, **characterized in that** a spring-guide cylinder (45) for tensioning the tensioning spring (19) is arranged on the tensioning lever (24) so as to be rotatable about a fifth axis of rotation (28).

6. Belt drive (7) according to one of Claims 1 to 5, **characterized in that** the tensioning spring (19) is arranged, by means of a first and a second spring guide (36, 37), on a tension rod (35) which is coupled in a force-transmitting manner to the tensioning-roller holder (20).

7. Belt drive (7) according to Claim 6, **characterized in that** a lever arm (23) extending radially from the first axis of rotation (21) is arranged on the tensioning-roller holder (20), wherein the tension rod (35) is arranged on the lever arm (23) so as to be rotatable about a sixth axis of rotation (29).

8. Belt drive (7) according to either of Claims 6 and 7, **characterized in that** the first and second spring guides (36, 37) each comprise a cylindrical portion (38, 39) which is arranged concentrically with respect to the tension rod (35) and which is surrounded radially at the outside by spring windings of the tensioning spring (19), wherein the first spring guide (36) projects beyond a first end face (40) of the tensioning spring (19) and the second spring guide (37) projects beyond a second end face (41) of the tensioning spring (19).

9. Belt drive (7) according to one of Claims 1 to 8, **characterized in that** a first guide stop (43), preferably a setting screw (42), is arranged on the tension rod (35), and the tensioning lever (24) forms a second guide stop (44) for the tensioning spring (19).

10. Belt drive (7) according to Claim 9, **characterized in that** the tensioning lever (24) forms the second guide stop (44) on a side of the tensioning spring (19) that faces towards the tensioning-roller holder (20), and preferably the first guide stop (43) is arranged on the tension rod (35) on a side of the tensioning spring (19) that faces away from the tensioning-roller holder (20).

## Revendications

1. Transmission à courroie (7) pour une machine agricole (1), en particulier une moissonneuse-batteuse automotrice, comprenant
- au moins deux poulies (15), les poulies (15) étant couplées l'une à l'autre au moyen d'une courroie d'entraînement sans fin (13),
- un dispositif de tension de courroie (17), le dispositif de tension de courroie (17) comprenant un support de galet de tension (20), qui est monté sur une extrémité de manière mobile en rotation autour d'un premier axe de rotation (21) et supporte sur l'autre extrémité un galet de tension (18) destiné à tendre la courroie d'entraînement (13),
le dispositif de tension de courroie (17) comprenant un ressort de tension (19), qui est prévu et est mis au point pour exercer une force de tension pour tendre la courroie d'entraînement (13) sur le support de galet de tension (20),
**caractérisée en ce que**
le dispositif de tension de courroie (17) destiné à tendre le ressort de tension (19) est formé comme un levier à genouillère, le dispositif de tension de courroie (17) comportant un levier de tension (24) destiné à tendre le ressort de tension (19), le levier de tension (24) étant disposé de manière à mobile en rotation autour d'un deuxième axe de rotation (25), le dispositif de tension de courroie (17) comprenant un levier (31) et une entretoise de pression (32) pour faire pivoter le levier de tension (24), le levier (31) étant disposé sur le levier de tension (24) de manière mobile en rotation autour d'un troisième axe de rotation (26), l'entretoise de pression (32) étant disposée sur une extrémité de manière mobile en rotation autour du premier axe de rotation (21) et étant disposée sur l'autre extrémité sur l'extrémité libre du levier (31) de manière à mobile par pivotement autour d'un quatrième axe de rotation (27).

2. Transmission à courroie (7) selon la revendication 1, **caractérisée en ce que** le ressort de tension (19) peut être transféré d'un état sensiblement détendu à un état tendu au moyen du dispositif de tension de courroie (17).

3. Transmission à courroie (7) selon la revendication 1, **caractérisée en ce que** la transmission à courroie comprend une butée (33) destinée à arrêter le dispositif de tension de courroie (17) lorsque le ressort de tension (19) est tendu.

4. Transmission à courroie (7) selon l'une des revendications 1 à 3, **caractérisée en ce qu'**un levier manuel (34) destiné à faire pivoter manuellement le levier (31) autour du troisième axe de rotation (26) est disposé sur le levier (31).

5. Transmission à courroie (7) selon l'une des revendications 1 à 4, **caractérisée en ce qu'**un cylindre de guidage de ressort (45) destiné à tendre le ressort de tension (19) est disposé sur le levier de tension (24) de manière mobile en rotation autour d'un cinquième axe de rotation (28).

6. Transmission à courroie (7) selon l'une des revendications 1 à 5, **caractérisée en ce que** le ressort de tension (19) est disposé au moyen d'un premier et d'un deuxième guide de ressort (36, 37) sur une barre de traction (35) couplée au support de galet de tension (20) de manière à transmettre des forces.

7. Transmission à courroie (7) selon la revendication 6, **caractérisée en ce qu'**un bras de levier (23) s'étendant dans la direction radiale en partant du premier axe de rotation (21) est disposé sur le support de galet de tension (20), la barre de traction (35) étant disposée sur le bras de levier (23) de manière mobile en rotation autour d'un sixième axe de rotation (29).

8. Transmission à courroie (7) selon l'une des revendications 6 à 7, **caractérisée en ce que** les premier et deuxième guides de ressort (36, 37) comprennent chacun une section cylindrique (38, 39), qui sont disposées concentriquement par rapport à la barre de traction (35) et sont entourées radialement du côté extérieur par des enroulements de ressort du ressort de tension (19), le premier guide de ressort (36) dépassant d'une première face frontale (40) du ressort de tension (19) et le deuxième guide de ressort (37) dépassant d'une seconde face frontale (41) du ressort de tension (19).

9. Transmission à courroie (7) selon l'une des revendications 1 à 8, **caractérisée en ce qu'**une première butée de guidage (43), de préférence une vis de réglage (42), est disposée sur la barre de traction (35), et le levier de tension (24) forme une deuxième butée de guidage (44) pour le ressort de tension (19).

10. Transmission à courroie (7) selon la revendication 9, **caractérisée en ce que** le levier de tension (24) forme la deuxième butée de guidage (44) sur un côté du ressort de tension (19) tourné vers le support de galet de tension (20), et de préférence la première butée de guidage (43) est disposée sur la barre de traction (35) sur un côté du ressort de tension (19) opposé au support de galet de tension (20).
